# EUROPEAN PATENT APPLICATION

(11) **EP 3 001 311 A1**
(43) Date of publication of application: **30.03.2016**
(21) Application number: 14382358.1
(22) Date of filing: 24.09.2014
(51) Int. Cl.: G06F 9/445

(54) **Method for automatically converting web applications into application that can be installed automatically on a plurality of platforms**

(71) Applicant: Telefonica Digital España, S.L.U., 28013 Madrid (ES)
(72) Inventor: Coloma Baiges, Daniel, Jesús, 28013 Madrid (ES); Schneider, Michael, 28013 Madrid (ES); Oteo Martinez, María, Angeles, 28013 Madrid (ES)
(74) Representative: Carpintero Lopez, Francisco

(57) **Abstract**

Present invention refers to a method for automatically converting web applications into a plurality of platforms. The method comprising the steps of: receiving a web application and associated metadata; hosting the web application at a public domain accessible by a browser; generating a manifest file, according to the associated metadata, for each platform from the plurality of platforms; modifying the code of the web application by adding a visual prompt to install the web application, using the manifest file generated, when a user accesses the web application through the public domain; and storing the manifest files and modified code into a folder created at the public domain.

## Description

### TECHNICAL FIELD OF THE INVENTION

Present invention generally relates to web applications and more specifically relates to converting web application into a plurality of platforms and making installable versions through a browser. Once the converted web applications are installed, a user can access to them even if he is working offline.

### BACKGROUND OF THE INVENTION

A web application, or web app, is software created in a browser-supported programming language (for example HTML, JavaScript and CSS) which runs in a browsing engine and relies on said browsing engine to be rendered and executed. The popularity of web applications is highly connected with the ubiquity of web browsers and the simplicity for introducing updates without distributing and installing software on client devices.

Nowadays, where telecommunication industry has turned from the common computer to a wide range of devices (tablets, smartphones, laptops...) and operating systems (Chrome, Firefox, iOS...), developers willing to distribute their applications are required to convert said application into all the existing platforms, which is sometimes an unaffordable task. Updating and distributing an application requires developers to learn different ways to package an application and manually adapt the application to all the different formats.

Prior art offers some solutions to convert web application into different formats such as PhoneGap, but there is a fundamental problem because they convert the application to native, and hence, the only way to distribute that application is through the publication of the applications in the stores for every device so that end-users can install them. Most of the benefits of using Web Apps are diluted by using such an approach in which a Web-To-Native conversion is used.

Massive use of mobile phones, computers and other portable devices make necessary that applications are available offline. There are some initiatives to facilitate working with web applications in this line as, for example, the **W3C Application Cache.** Given that HTML5 provides an application caching mechanism that lets web-based applications run offline, developers can use the Application Cache (*AppCache*) interface to specify assets that the browser should cache and make available to offline users.

Also **Mozilla Open Web Apps** which are applications that are built using standard Open Web Technologies, can be accessed using a web browser but also allow users to install them on a device and work offline. This is achieved by using an Open Web Apps manifest file that contains the information that a Web browser needs to interact with an app such as its name and description, icons, etc. OWAs (Open Web Apps) installed through the browser are available to be executed without launching the browser anymore in the native OS App launcher.

**Chrome Apps** are another example of an initiative looking for offering the experience of a native app, but taking advantage of the web pages. Just like Mozilla OWA, Chrome Apps are written in HTML5, JavaScript, and CSS and include a manifest file with the same target than the OWA but with different format. After installing a Chrome App, it is available through the browser or by using specific Chrome Apps launcher.

**W3C Web Apps Manifest:** W3C is working in order to define a standard Web App Manifest format.

The problem with these solutions, as the Application Cache, is that, although they allow Web Applications to work offline, many of the developers do not use this technology in the practice because using it and maintaining it requires continuous effort. This is a fact supported, for example by statistics of FirefoxOS Marketplace, where only a reduced percentage of the apps use Application Cache. A solution that allows developers to use Application Cache without caring about it, it is hence extremely desirable.

Lastly, many platforms offer the possibility to install a Web Application either by using a given API (e.g. Firefox) or by "bookmarking" the Web Application through the browser. However, this is a task that must be done manually by developers and that requires developers to host their apps in a website. A solution that performs the hosting on behalf of the users and provides the user interface for application installation would be also extremely useful for developers.

### SUMMARY OF THE INVENTION

Present invention solves the aforementioned problems by presenting a method for automatically converting web applications into installable applications in a plurality of platforms. Installing converted web applications does not require the web application to be published in an application store because the method of present invention automatically converts web applications to be installable through the browser. The method comprises the steps of:
a) receiving, from a first user, a web application assets and associated metadata;
b) hosting the web application at a public domain accessible by a browser;
c) generating a manifest file, according to the associated metadata, for each platform from the plurality of platforms;
d) modifying the code of the web application by adding a visual prompt to install the web application using the manifest file generated for a certain platform in step c), when a second user using the certain platform accesses the web application through the public domain.
e) storing the manifest files and modified code into a folder created at the public domain.

When the second user, using the certain platform, accesses the web application, the method may further comprise:
f) checking, during runtime of the web application, the certain platform where the second user is accessing;
g) showing an installation message in the visual prompt according to the checking of step f)

When the second user accesses, using the certain platform, to the web application through the public domain, the method of present invention, may further comprise:
- clicking, by the second user, on the visual prompt;
- installing the web application using the manifest file generated for the certain platform;

According to one particular embodiment, when the converted application is installed on a certain platform, the invention may further comprise setting an icon on a desktop of the certain platform to launch the converted application. The advantage of this usability improvement lies on the user does not need to use the browser anymore to access the application, but instead can access it through an icon in the homescreen, in the app launcher or in other Operating System location. Users can simply click on that icon and the application is launched without using the browser anymore.

Additionally, present invention may further comprise the steps of:
- generating an application cache manifest according to the associated metadata, wherein the application cache manifest comprises a reference to files to be cached and files not to be cached;
- including, into the manifest files generated for each platform, a reference to the application cache manifest. The reference may be, for example, an URL.

The application cache manifest may be stored into the folder created at the public domain.

A user working offline may click on the icon set on the desktop, and then the method of present invention according to one particular embodiment may launch the converted application using cached data according to the application cache manifest.

The plurality of platforms may be a combination of operating systems, electronic devices and browsers.

Optionally, when a web application is accessed through the public domain by a user using an electronic device, one embodiment of present invention may comprise the steps of:
- checking whether the converted application is already installed at said device;
- if the converted application is not already installed, showing the visual prompt.

The metadata associated to the web application may be selected from: name of the web application, description, icon for a desktop, launch path and required permissions to execute the application.

Additionally, the metadata associated to the web application may further comprise a list of assets that are forbidden to be cached.

A user may provide web application assets in a compressed file.

Optionally, web application assets may be provided by a reference to a website or an online repository where the web application is hosted.

According to one particular embodiment, when the web application is updated by a user, present invention may further comprise storing a modification of the web application into the folder created at the public domain, where said update is available for the certain platform the next time the second user launch the converted application at the certain platform.

A final aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

According to one particular embodiment, once a user submits a web application and associated metadata (submitted for example at http://www.cacheator.com), present invention may comprise the steps of creating installers for a plurality of platforms; modifying the web application to point to those installers when the application is used; creating cached assets; and host it at a public domain (for example http://appname.cacheator.com).

One particular embodiment of present invention allows a developer to submit a Web Application to a system that automatically converts the web application, designed to run with connection and without the possibility to be installed, into an application installable for different platforms (such as iOS/iPad, Safari Browser; Firefox for Chrome, MAC or Windows; Firefox OS; Chrome for Android; Chrome for MAC or Windows); makes the application capable to work offline by allowing it to cache data to be used offline; hosts the application in a public domain; and shows to any user accessing the application through the browser, how to install it so no use of the browser is required anymore. Therefore, the end-user is able to use the Web Application even when no connection is available. This also leads to bandwidth saving and hence money saving to end-user by only connecting when a new version of the app is available.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows a sample web form for submitting an application and associated metadata.
**Figure 2****.-** shows a plurality of users accessing the application from different platforms.
**Figure 3****.-** shows a prompt inviting the user to install the web application as an application.
**Figure 4****.-** shows the process according to one embodiment of the invention for Firefox for MAC OS, where a native Firefox installation prompt is displayed upon the user clicking in the previous prompt of figure 3.
**Figure 5****.-** shows a message confirming that the application has been installed after the user clicking on the native Firefox installation prompt, according to one particular embodiment of the invention.

### DETAILED DESCRIPTION OF THE INVENTION

The present invention may be embodied in other specific devices, systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The present text uses the term "platform" indistinctly to refer to devices, operating systems, browsers or combinations thereof. This means that the devices, operating systems or browsers have some requirements about format and syntax which are met by the converted web application using the present invention.

As it will explained in more detailed below, present invention describes a process for converting a Web Application, designed to be executed being connected to a remote host, into an application that can be executed locally, without requiring any connection and that can be installed in computers, mobile devices, tablets, etc. without publishing it in any application store. This allows the application to be discovered once through the browser (no need for app store) and allowing the user to install the application so that it can be launched since that moment on without launching the browser.

To get an installable and offline capable version of a Web Application, the method of present invention needs a developer submitting the Web Application assets and associated metadata. The application assets may include HTML files, JavaScript files, CSS files and images among other type of files and can be submitted in different ways, for example:
- in a zip file or similar package that contains all the application assets
- providing a reference to the website that currently hosts the application
- providing a reference to an online repository (e.g. Github) where the application assets are available.

According to one embodiment of the invention, the metadata associated to the application may be the following:
- Name (1): the name of the application that serves to identify it by users.
- Description (2): a brief textual description of the application.
- Icon (3): the icon that will be used to identify the application, for instance in the device's home screen.
- Launch path (4): the path within the application that is loaded when the application starts.
- The permissions (5) if any (e.g. Geolocation) the application requires to be executed

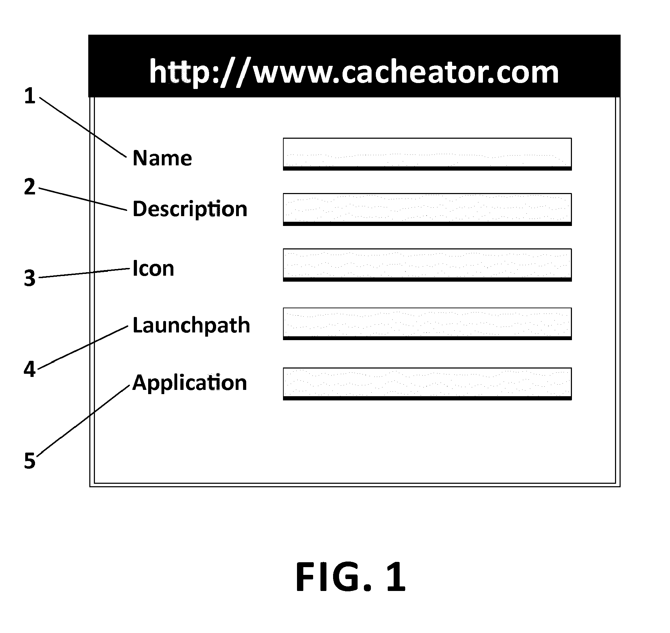

Optionally, additional information may be submitted in certain embodiments of present invention. For example a list of assets (6), if any, that should never be cached in the device and be always retrieved from the network. Figure 1 shows a sample web form for submitting an application and associated metadata.

Once the web application and associated metadata are submitted, the app is automatically processed, the required conversions are done and the app hosted at a publicly accessible domain, for example at appname.cacheator.com. According to the preferred embodiment, the following steps may be comprised:
**a)** Reserving the domain where the app will be hosted, the domain may take the format http://<appname>.<domain> where '<domain>' is a domain available to the system to upload content (e.g. Websytem.com) and '<appname>' is the name (1) of the application as entered by the developer.
**b)** Creating a new folder under such domain where the resulting "installable" Web Application will reside.
**c)** Inspecting the zip file, website or repository, depending on how developers have submitted the application and will copy all the application assets in the folder created in b).
**d)** Generating an adequate Application Cache Manifest, which defines which assets (web pages, images, etc) can be cached and which cannot. HTML5 provides the ability to access the Web Application even without a network connection by caching those assets. Thus, the Application Cache Manifest includes a reference to all files that should never be cached (those included in the list of assets (6) provided by the developer, if any) in the "Network" section of the Application Cache Manifest; and a reference to all files to be cached (the rest of the assets) in the "Cache" section of the Application Cache Manifest. The generated Application Cache Manifest may be included in the folder created in step b).
The following is an example of an Application Cache Manifest:

| CACHE MANIFEST |
|---|
| # Tue Mar 18 02:22:08 UTC 2013 |
| |
| |
| # cache all of these |
| CACHE: |
| |
| # auto-generated file list |
| # *.html |
| home.html |
| app.json |
| |
| # js/*.js |
| js/add2home.js |
| js/async_storage.js |
| js/firebase.js |
| js/jquery-1.9.0.min.js |
| js/tracker.js |
| |
| # css/*.css |
| css/add2home.css |
| css/modern-responsive.css |
| css/modern.css |
| |
| # images/* |
| images/Firefox-all.png |
| images/Firefox-develop.png |
| images/Firefox-plan.png |
| images/Firefox-stable.png |
| images/Firefox-stablet.png |
| |
| # fonts/* |
| fonts/iconFont.eot |
| fonts/iconFont.svg |
| fonts/icon Font.ttf |
| fonts/icon Font.woff |
| fonts/license.txt |
| # end of auto-generated file list |
| |

**e)** Including the icons (3) in an adequate position of the folder described in step b) (e.g. in a subfolder).
**f)** Generating manifest files for all those platforms/Operating Systems that require a manifest for installing applications such as Google Chrome or Firefox. A Manifest file is a document that describes various aspects of a Web Application. Some of these aspects are presentational (e.g. location of the application icons, screen size), while others aspects have security implications (e.g. required permissions). The manifest may include the name (1), the permissions (5), the URL for the app (step a)), the URL of the Application Cache Manifest generated in step d), a reference to the location where the icon (3) has been copied (step e)), etc. The manifests may include the appropriate format and syntax for the target platform. For every platform a different manifest may be required and hence generated and included to the folder described in step b).
The following is an example of Firefox Manifest:

| |
|---|
| ```
                    {
                     "name": "FFOSTracker",
                     "description": "Firefox OS Tracker",
                     "launch_path": "ffostracker/home.html",
                     "appcache_path": "ffostracker/application.appcache",
                      "icons": {"128": "ffostracker/style/icons/firefox-128.png"}
                    }
``` |

The following is an example of Chrome Manifest:

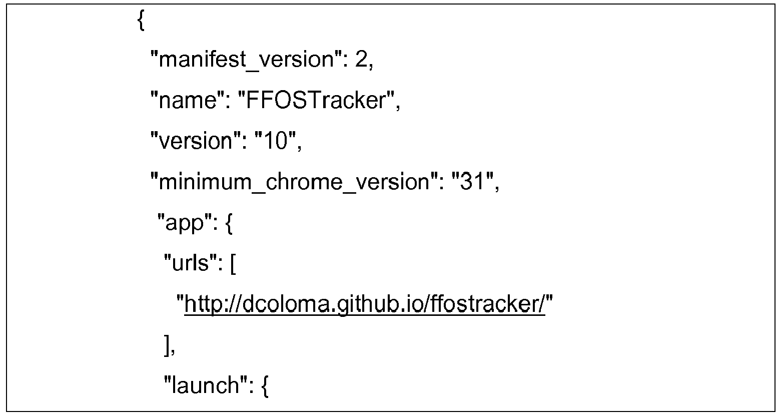

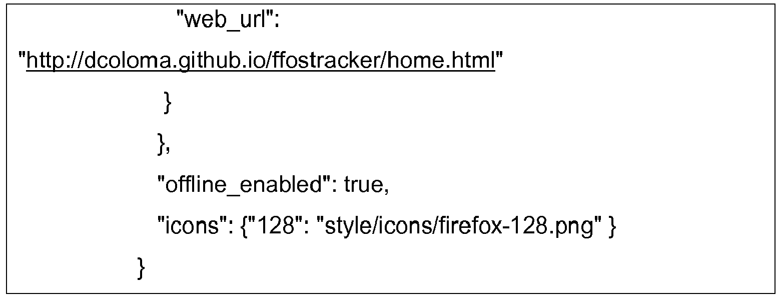

**g)** Modifying the main page of the Web Application (e.g. Index.html) to comprise:
- a reference to the Application Cache Manifest generated in step d);
- CSS and Javascript libraries to allow a visual prompt to be presented to the user when the user accesses the application at the domain defined in step a), which allows the user to launch the installation of the Web Application. These libraries handle any operating system/device heterogeneity to allow installation in multiple and different devices: Chrome, Firefox, iPhone, etc. This is done by checking during runtime the type of device via media queries, User Agent and API inspection. For example:
- whether the execution environment is based on Firefox or not is based on the availability of the navigator.mozApps object:

| |
|---|
| ```
                    if (navigator.mozApps != null)
                    {
                     isFirefox = true;
                    }
``` |

- The library adds a UI element to the application to indicate the user he can install the application or add it to the Homescreen, for example:

| |
|---|
| balloon = document.createElement('div'); |
| balloon.id = 'addToHomeScreen'; |
| balloon.style.cssText += 'left:-9999px;transition-property:transform,opacity;transition-duration:0;transform:translate3d(0,0,0);position:fixed'; |
| options.message = 'Download it as a Application for %device by clicking <a id="installer"> here </a>', |

- Installation is done by invoking the appropriate method for every platform. For example, the codes for Firefox and Chrome would be the following:
Firefox

| |
|---|
| var req = navigator.mozApps.install(manifestUrl); |

Chrome:

| |
|---|
| chrome.webstore.install(chromeltem,function(){alert("Firefox OS Tracker Successfully installed");close();}, function(error){alert("App could not be installed " + error);}); |

**h)** Uploading to the folder described in step b), including the assets that have been submitted by the developer together with those created (i.e. the Application Cache Manifest) / modified, i.e. the modified main page or the CSS and Javascript libraries.

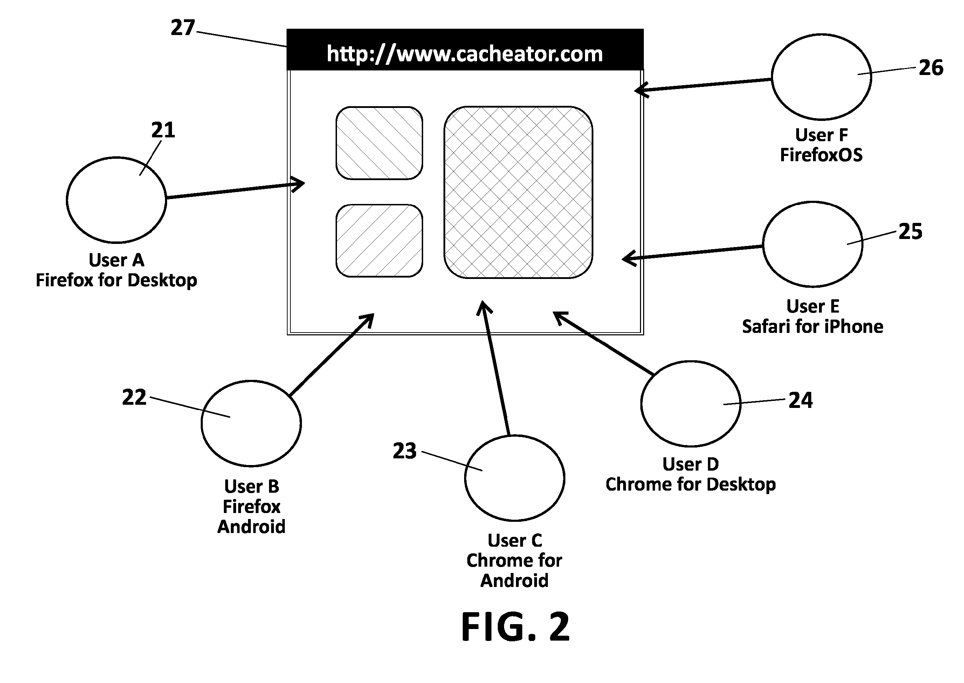

Users can then access that application by accessing the domain reserved in step a) (e.g. appname.cacheator.com (27)) through different browsers/platforms as shown in figure 2, where a plurality of users (A-F) access the application from different platforms. Specifically, figure 2 shows user A using Firefox for desktop (21), User B using Firefox for Android (22), user C using Chrome for Android (23), User D using Chrome for desktop (24), User E using Safari for iPhone (25), User F using Firefox OS (26).

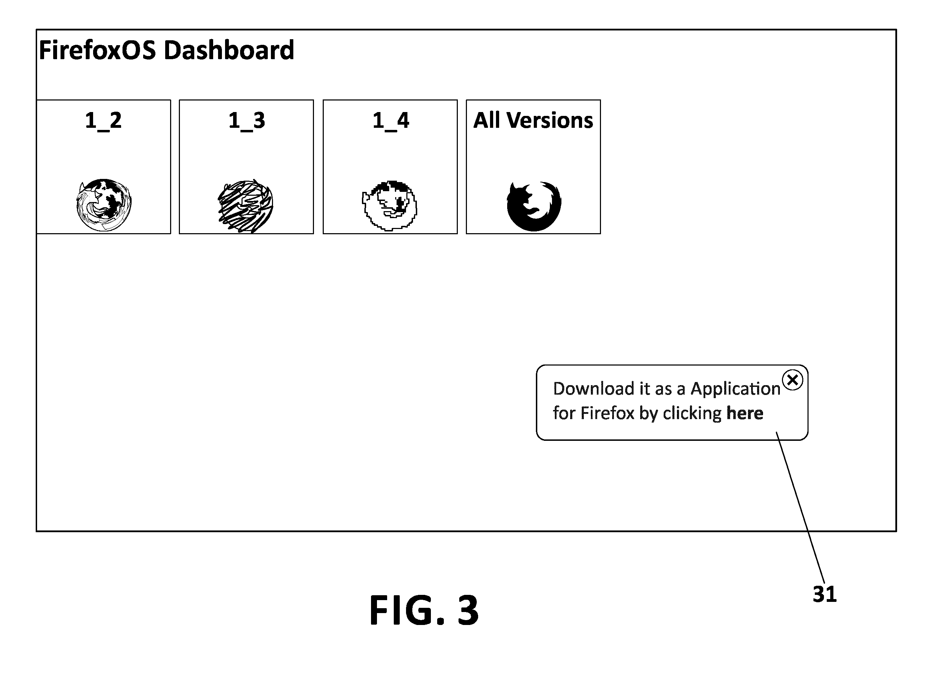

Figure 3 shows the case of, when the user access to the web application through a browser as explained above, apart from using the app, the user is shown a visual prompt (31) as defined in step g), allowing him to "install" the application. If the user chooses to install the application it will not need to access it through the browser anymore, but it could be accessible through other means (e.g. an icon placed at the home screen). This indication (31) takes into account whether the app has been already installed or not in order to avoid showing that indication if the app has been already installed.

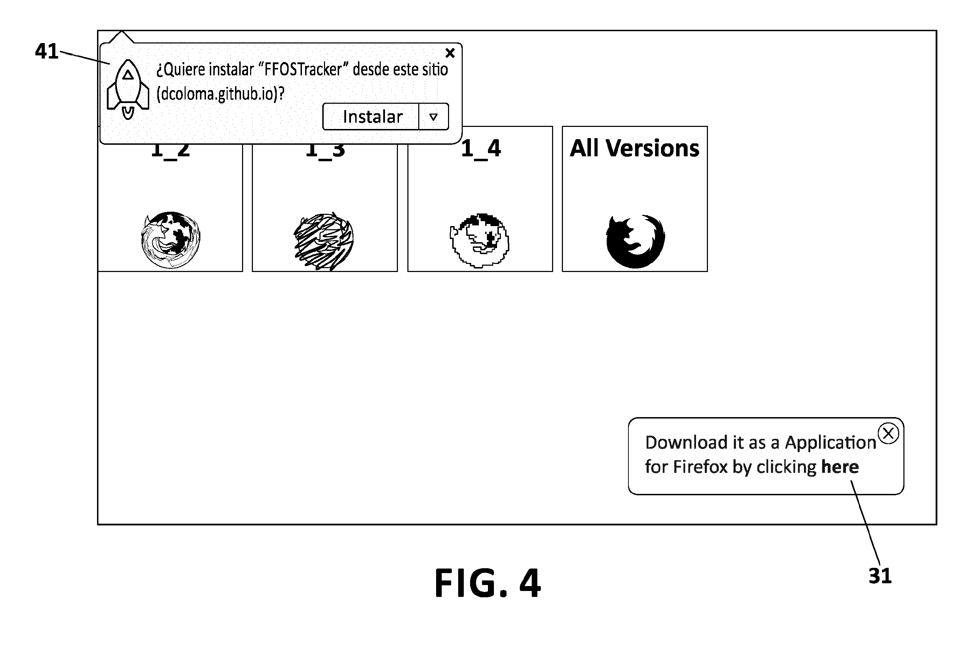

Figure 4 shows the process when the user accepts to install the app. Then, the specific process for the different platforms is followed. For instance, in figure 4 the process for Firefox for MAC OS is shown and a native Firefox installation prompt (41) is displayed upon the user clicking in the previous prompt (31).

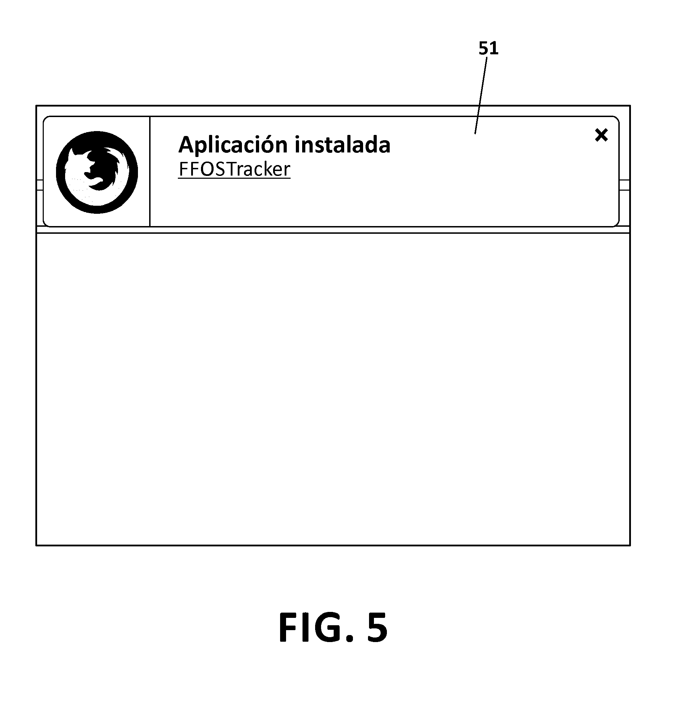

In Figure 5, it is shown a message (51) confirming that the application has been installed after the user clicking on the native Firefox installation prompt (41).

Once the app is installed, users can use the app without using the browser and without the need of an internet connection, provided the application has been already downloaded and cached. In that case, the application is exposed by means of an icon at the home screen. When a user clicks on that icon, the app is launched without the need to launch the browser and without showing any indication about the browser user interface such as the navigation bar, menus, etc.

## Claims

1. Method for automatically converting web applications into installable applications in a plurality of platforms **characterized by** comprising the steps of:
a) receiving, from a first user, a web application assets and associated metadata;
b) hosting the web application at a public domain accessible by a browser;
c) generating a manifest file, according to the associated metadata, for each platform from the plurality of platforms;
d) modifying, when a second user using the certain platform accesses the web application through the public domain, the code of the web application by adding a visual prompt to install the web application using the manifest file generated for a certain platform in step c);
e) storing the manifest files and modified code into a folder created at the public domain.

2. Method according to claim 1 wherein the second user, using the certain platform, accesses the web application, further comprising:
f) checking, during runtime of the web application, the certain platform where the second user is accessing;
g) showing an installation message in the visual prompt according to the checking of step f)

3. Method according to any of the previous claims wherein the second user accesses, using the certain platform, to the web application through the public domain, further comprising:
- clicking, by the second user, on the visual prompt;
- installing the web application using the manifest file generated for the certain platform;

4. Method according to any one of the previous claims wherein the converted application is installed on a certain platform, further comprising setting an icon on a desktop of the certain platform to launch the converted application.

5. Method according to any one of previous claims, further comprising the steps of:
- generating an application cache manifest according to the associated metadata, wherein the application cache manifest comprises a reference to files to be cached and files not to be cached;
- including, into the manifest files generated for each platform, a reference to the application cache manifest.

6. Method according to claims 4 and 5, wherein a user working offline and clicking on the icon, further comprising launching the converted application using cached data according to the application cache manifest.

7. Method according to claim 5 further comprising storing the application cache manifest into the folder created at the public domain.

8. Method according to any one of the previous claims wherein the plurality of platforms are a combination of operating systems, electronic devices and browsers.

9. Method according to any one of the previous claims wherein the web application is accessed through the public domain by a user using an electronic device, further comprising:
- checking whether the converted application is already installed at said device;
- if the converted application is not already installed, showing the visual prompt.

10. Method according to any one of the previous claims wherein the metadata associated to the web application are selected from: name of the web application, description, icon for a desktop, launch path and required permissions.

11. Method according to any one of the previous claims wherein the metadata associated to the web application further comprising a list of assets that are forbidden to be cached.

12. Method according to any one of the previous claims wherein receiving , from the first user, a web application and associated metadata further comprising the first user providing web application assets in a compressed file.

13. Method according to any one of the previous claims wherein receiving, from the first user, a web application and associated metadata further comprising the first user providing web application assets by a reference to a website or an online repository where the web application is hosted.

14. Method according to any one of the previous claims wherein the web application is updated by the first user, further comprising storing a modification of the web application into the folder created at the public domain, where said update is available for the certain platform the next time the second user launch the converted application at the certain platform.

15. A computer program product comprising computer program code adapted to perform the method according to any of the claims 1-14 when said program code is executed on a computer, a digital signal processor, a field-programmable gate array, an application-specific integrated circuit, a micro-processor, a micro-controller, or any other form of programmable hardware.
